# EUROPEAN PATENT APPLICATION

(11) **EP 2 756 938 A1**
(43) Date of publication of application: **23.07.2014**
(21) Application number: 13160966.1
(22) Date of filing: 26.03.2013
(51) Int. Cl.: B25J 19/00, F24H 3/04

(54) **Heating element unit, control panel, and robot system**

(30) Priority: 22.01.2013 JP 2013009585
(71) Applicant: Kabushiki Kaisha Yaskawa Denki, Kitakyushu-shi, Fukuoka 806-0004 (JP)
(72) Inventor: Ohfuchi, Yoshitaka, Kitakyushu-shi, Fukuoka 806-0004 (JP)
(74) Representative: Grünecker, Kinkeldey, Stockmair & Schwanhäusser

(57) **Abstract**

A heating element unit (4) according to an embodiment includes a heating element (9), a heat transfer base (8) in which the heating element (9) is provided, and a casing (41) in which the heat transfer base (8) is arranged. The heat transfer base (8) includes a mounting wall (81) on which the heating element (9) is mounted in a close contact state, and side walls (82a, 82b) that perpendicularly extend in a same direction from both ends in a short direction of the mounting wall (81) and are mounted on an inner surface of the casing (41) in a contact state.

## Description

### FIELD

The embodiment discussed herein is directed to a heating element unit, a control panel, and a robot system.

### BACKGROUND

A general robot system includes a robot driven by an electric motor to perform a predetermined operation and a control panel that controls the drive of the electric motor. The electric motor is driven by passage of electric current, and is braked when the electric current stops. When the electric current stops, however, the electric motor acts as a power generator and generates regenerative electric power.

Conventionally, in the robot system, the regenerative electric power is typically converted into heat by a regeneration resistor and radiated into the atmosphere. Because the regeneration resistor reaches significantly high temperature, design of installation location and cooling means thereof has been devised, but still, cooling capacity thereof is limited.

To address this, without specifically taking account of the installation location and the cooling means of the regeneration resistor, a configuration to efficiently use the generated heat has been disclosed. In this configuration, the heat generated by the regeneration resistor is used for heating and keeping a coating material within an appropriate temperature range in order to maintain high coating quality using a coating robot.

Documents related to the conventional art include Japanese Patent Application Laid-Open Publication No. 10-193293.

The technique disclosed in the documents related to the conventional art is, however, only applied to a coating material, such as the coating material of the coating robot, of which appropriate temperature range is defined. That is, the conventional art lacks versatility. From the viewpoint of appearance, the regeneration resistor is preferably accommodated in the control panel for example. To address these, it is required to develop a more effective structure for cooling the regeneration resistor that reaches high temperature, as described above.
Although the regeneration resistor has been exemplified herein as a heating element that reaches high temperature, other heating elements also have a common problem.

An aspect of the embodiment is to provide a heating element unit, a control panel, and a robot system that can efficiently cool the heat of a heating element.

### SUMMARY

A heating element unit according to an aspect of an embodiment includes a heating element, a heat transfer base in which the heating element is provided, and a casing in which the heat transfer base is arranged. The heat transfer base includes a mounting wall on which the heating element is mounted in a close contact state, and side walls that perpendicularly extend in a same direction from both ends in a short direction of the mounting wall and are mounted on an inner surface of the casing in a contact state.

An aspect of the embodiment provides a heating element unit, a control panel, and a robot system that can effectively cool a heating element that reaches high temperature.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a block diagram of a robot system according to the embodiment;

FIG. 2 is a schematic diagram explaining the robot system;

FIG. 3A is a diagram explaining a regeneration resistor unit as a heating element unit according to the embodiment;

FIG. 3B is a diagram illustrating a state in which the regeneration resistor unit is accommodated in a control panel;

FIG. 4 is a partially cutaway plan view of the regeneration resistor unit;

FIG. 5 is a cross-sectional view taken along line V-V of FIG. 4;

FIG. 6 is a back view explaining the regeneration resistor unit;

FIG. 7 is a diagram illustrating a regeneration resistor that is a heating element in the regeneration resistor unit and a heat transfer base; and

FIG. 8 is a diagram explaining the heat transfer base on which the regeneration resistor is mounted.

### DESCRIPTION OF EMBODIMENT

Hereinafter, an embodiment of a heating element unit, a control panel, and a robot system disclosed in the present application will be described in detail with reference to the accompanying drawings. The invention is not limited by the embodiment described below.

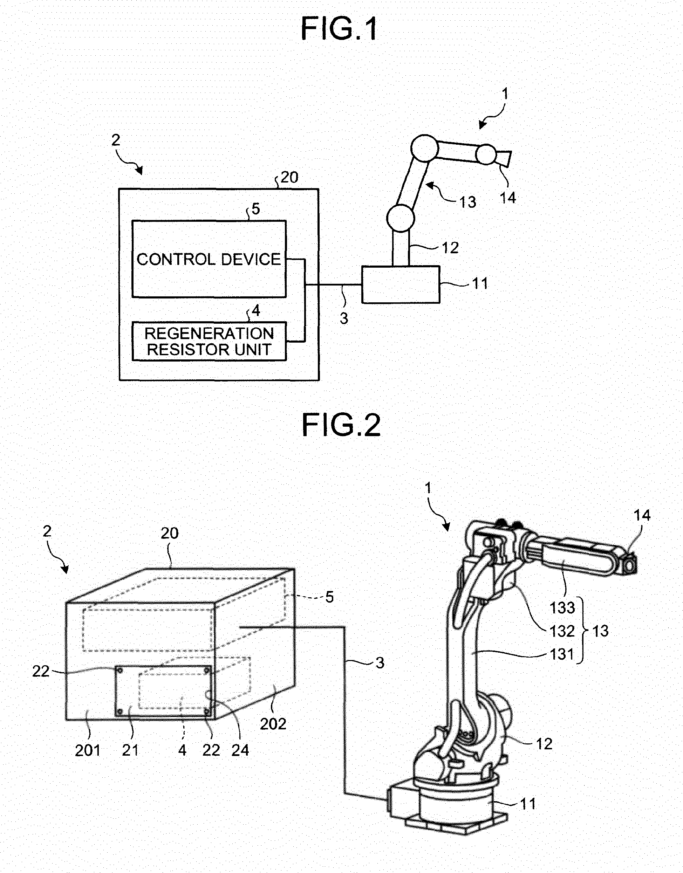

First, an overview of the robot system according to the embodiment will be described with reference to FIG. 1 and FIG. 2. FIG. 1 is a block diagram of the robot system according to the embodiment, and FIG. 2 is a schematic diagram explaining the robot system. Hereinafter, the heating element unit will be described as a regeneration resistor unit 4.

As illustrated in FIG. 1, the robot system according to the embodiment includes a robot 1 and a control device 5 for driving the robot 1. The control device 5 controls an electric motor (not illustrated) for driving the robot 1. The robot system includes the regeneration resistor unit 4 that converts regenerative electric power generated by the electric motor into thermal energy. The robot 1, the regeneration resistor unit 4, and the control device 5 are connected with each other via a cable 3.

As illustrated in FIG. 1, the control device 5 and the regeneration resistor unit 4 are both accommodated in a housing 20 of a control panel 2. A configuration of the regeneration resistor unit 4 and a structure for accommodating the regeneration resister 4 in the control panel 2 will be described in detail later.

The robot 1 is not specifically limited as long as it includes an arm body and the like driven by an electric motor. The robot system according to the embodiment includes what is called a vertical multi-joint robot as illustrated in FIG. 2.

The robot 1 includes a body part 12 horizontally rotatably installed on a base 11 and an arm part 13 rotatably connected with the body part 12 via a joint part. The robot 1 also includes a wrist part 14 rotatably connected with the leading end of the arm part 13. As illustrated in FIG. 2, the arm part 13 includes a first arm 131, a second arm 132, and a third arm 133.

The robot 1 is connected with the control panel 2 via the cable 3. As illustrated in FIG. 2, the control panel 2 includes the housing 20 formed in a substantially rectangular box shape.

As illustrated in FIG. 2, the housing 20 is provided with a unit port 24 through which the regeneration resistor unit 4 is taken in and out, at a lower part of a side surface 201 of the housing 20. The unit port 24 is typically closed with a cover body 21, which is removed when the regeneration resistor unit 4 is taken in and out. The cover body 21 is detachably mounted on the housing 20 with screws 22.

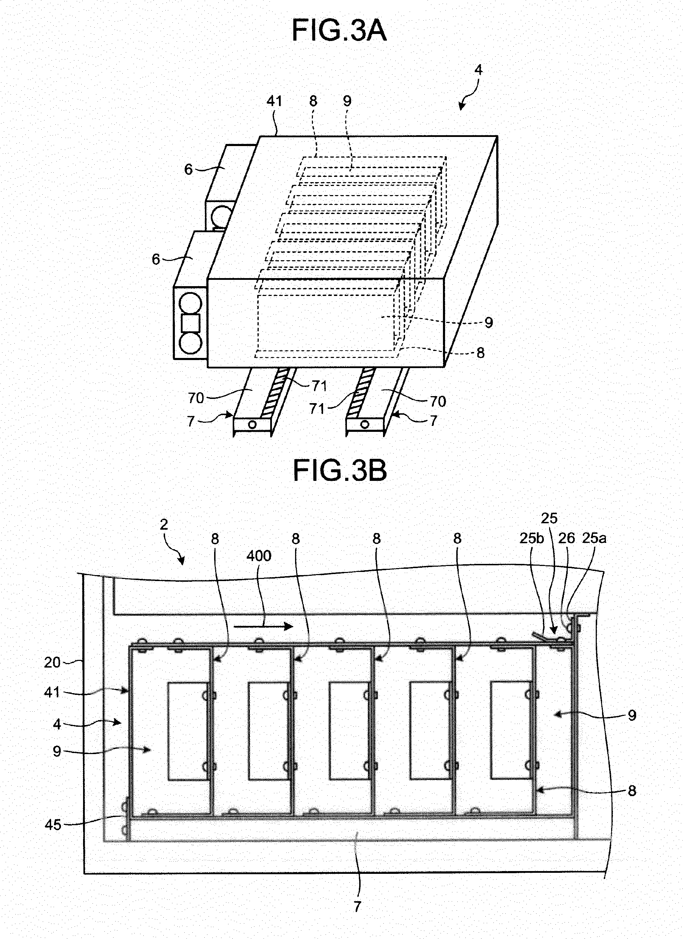

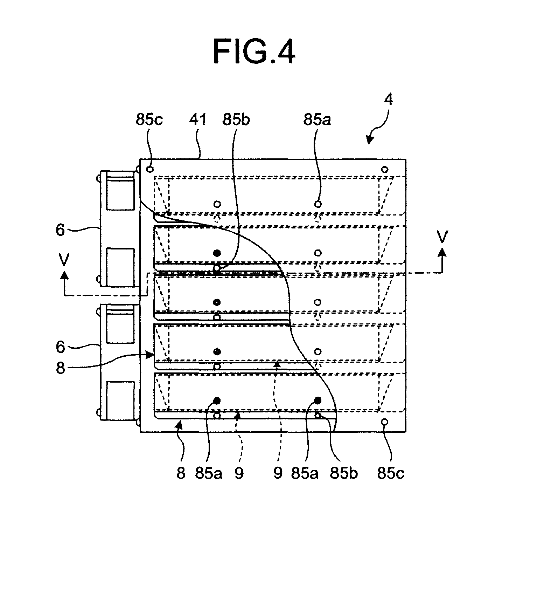

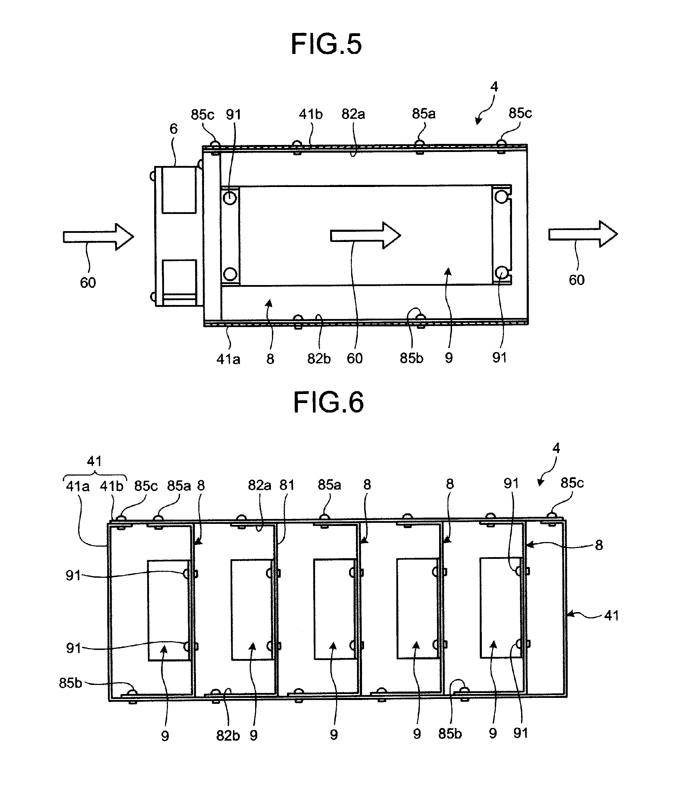

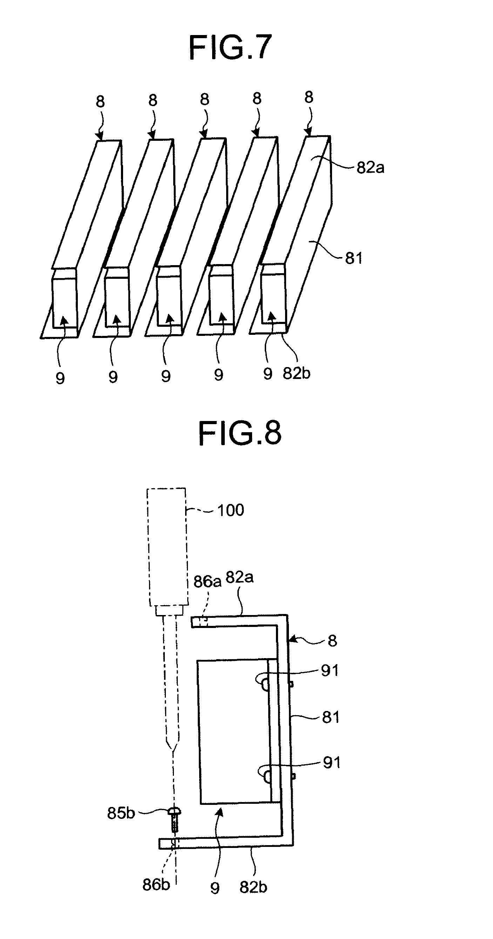

The regeneration resistor unit 4 will be specifically described herein with reference to FIG. 3A to FIG. 8. FIG. 3A is a diagram explaining a regeneration resistor unit 4 serving as the heating element unit according to the embodiment, and FIG. 3B is a diagram illustrating a state in which the regeneration resistor unit 4 is accommodated in the control panel 2. FIG. 4 is a partially cutaway plan view of the regeneration resistor unit 4, FIG. 5 is a cross-sectional view taken along line V-V of FIG. 4, and FIG. 6 is a back view explaining the regeneration resistor unit 4. FIG. 7 is a diagram illustrating a regeneration resistor 9 that is the heating element included in the regeneration resistor unit 4 and a heat transfer base 8, and FIG. 8 is a diagram explaining the heat transfer base 8 on which the regeneration resistor 9 is mounted.

The regeneration resistor unit 4 includes the regeneration resistor 9 and the heat transfer base 8 on which the regeneration resistor 9 is mounted. The regeneration resistor 9 is an example of heating means for generating heat or a heating unit that generates heat. The heat transfer base 8 is an example of heat radiation means or a heat radiation unit that radiates heat of the regeneration resistor 9 serving as heating means or a heating unit. The regeneration resistor 9 consumes regenerative electric power generated by the electric motor operating as a power generator, by converting it into heat, when energization stops at the time of braking the electric motor. Accordingly, the regeneration resistor 9 becomes a high-temperature heating element.

The surface temperature of the regeneration resistor 9 rises to around 100°C. It is therefore not preferable to expose the high-temperature regeneration resistor 9 or to dispose the regeneration resistor 9 directly adjacent to the control device 5 that controls the robot 1.

From the viewpoint of aesthetics, it is preferable to accommodate the regeneration resistor 9 in the control panel 2. Thus, the regeneration resistor unit 4 according to the embodiment is configured as follows.

Specifically, as illustrated in FIG. 3A to FIG. 6, the regeneration resistor unit 4 includes the regeneration resistor 9, the heat transfer base 8 on which the regeneration resistor 9 is provided, and a casing 41 in which the heat transfer base 8 is arranged. The casing 41 is an example of an accommodating unit of the heat transfer base 8 as heat radiation means or a heat radiation unit, or an accommodating unit that accommodates the heat transfer base 8 with at least part thereof contacting with the accommodating unit.

The regeneration resistor unit 4 according to the embodiment includes a plurality of regeneration resistors 9 and heat transfer bases 8 in this embodiment. Specifically, for example, the regeneration resistor unit 4 includes five regeneration resistors 9 and five heat transfer bases 8. The regeneration resistors 9 and the heat transfer bases 8 correspond to each other on a one-on-one basis. The five heat transfer bases 8 with the regeneration resistors 9 mounted respectively are arranged in parallel in the casing 41.

The regeneration resistor 9 has a substantially rectangular box shape of which surface mounted to the heat transfer base 8 has the maximum area. As illustrated in FIG. 5, the regeneration resistor 9 is connected, at its four corners of the mounting surface, to the heat transfer base 8 with screws 91.

As illustrated in FIG. 6 to FIG. 8, the heat transfer base 8 includes a resistor mounting wall 81 on which the regeneration resistor 9 is mounted and side walls 82a and 82b perpendicularly extending in the same direction from both ends of the resistor mounting wall 81 in the short direction. That is, the heat transfer base 8 is formed in a gutter shape (substantially U-shaped).

The resistor mounting wall 81 of the heat transfer base 8 is a surface to which the regeneration resistor 9 is mounted in a close contact state, and is larger than the mounting surface of the regeneration resistor 9. That is, the surface of the resistor mounting wall 81 in close contact with the regeneration resistor 9 acts as a heat transfer surface to which the heat from the high-temperature regeneration resistor 9 transfers. The side walls 82a and 82b act as mounting surfaces mounted to an inner surface of the casing 41 in a contacting state with screws 85a and 85b, respectively. The side walls 82a and 82b as mounting surfaces transfer the heat transferred from the resistor mounting wall 81 to the casing 41.

As described above, the heat transfer base 8 can hold the regeneration resistor 9 in a hanging state in the casing 41 and directly absorb the heat from the regeneration resistor 9 to radiate the absorbed heat to the casing 41 through heat conduction.

The regeneration resistor 9 and the heat transfer base 8 are arranged so that the longitudinal directions thereof are along with each other. That is, the regeneration resistor 9 is mounted to the resistor mounting wall 81 in a position in which the longitudinal direction of the regeneration resistor 9 is along the longitudinal direction of the heat transfer base 8.

As illustrated in FIG. 6, the casing 41 is formed of a casing body 41a and an upper cover 41b to have a substantially square tube shape. The casing body 41a has a substantially U-shape with an opening in cross-sectional view. The upper cover 41b has a rectangular shape in plan view and mounted to the opening of the casing body 41a with screws 85c. Cooling fans 6 are disposed on one of the opposed openings of the casing 41. With such a configuration, the casing 41 forms a wind tunnel.

As illustrated in FIG. 3A to FIG. 6, each of the heat transfer bases 8 mounted to enclose the regeneration resistor 9 is mounted to the casing 41 with the longitudinal direction thereof aligned with the direction along which cooling air from the cooling fans 6 flows (refer to arrows 60 in FIG. 5). The five heat transfer bases 8 are arranged at predetermined intervals in the short direction thereof. As illustrated in FIG. 6, each of the heat transfer bases 8 is disposed apart from adjacent heat transfer bases 8. If a ventilating space is formed between the respective regeneration resistors 9, however, at least one of the upper and lower side walls 82a and 82b of the heat transfer bases 8 may be contacted with each other.

As described above, the regeneration resistor 9 is arranged in a hanging state in the casing 41 serving as the wind tunnel via the heat transfer base 8. As illustrated in FIG. 6 and FIG. 7, the heat transfer bases 8 are arranged at predetermined intervals in the short direction thereof. Accordingly, each of the regeneration resistors 9 is arranged in a separate air duct.

That is, the heat transfer base 8 functions as a guide for the air from the cooling fans 6. This means that each of the regeneration resistors 9 may individually and efficiently receive the air from the cooling fans 6. The regeneration resistor 9 can release the heat through the resistor mounting wall 81 acting as a relatively large heat transfer surface of the heat transfer base 8. The configuration described above enhances the cooling effect of the regeneration resistor 9. The cooling fan 6 is an example of cooling means for cooling the regeneration resistor 9 or an air-cooling unit that air-cools the regeneration resistor 9.

As described above, the heat transfer base 8 according to the embodiment has a shape that facilitates mounting of the regeneration resistor 9 and guides an air flow from the cooling fan 6.

As described above, the heat transfer base 8 according to the embodiment has the resistor mounting wall 81 formed to be a substantially vertical surface and the side walls 82a and 82b extending, in substantially parallel with each other, from the both ends of the resistor mounting wall 81 in the short direction. Because the side opposite to the resistor mounting wall 81 is an opening, the regeneration resistor 9 can be easily mounted to the resistor mounting wall 81 of the heat transfer base 8.

As illustrated in FIG. 8, the heat transfer base 8 is formed such that the upper side wall 82a is narrower than the lower side wall 82b in the mounted state thereof (refer to FIG. 3A and FIG. 3B). Therefore, as illustrated in FIG. 8, a fastening tool 100 such as a screwdriver may be kept in a substantially vertical position when the heat transfer base 8 is screwed onto the casing 41. Note that, instead of causing the width of the upper side wall 82a to be smaller than the width of the lower side wall 82b, a notch or a hole into which the fastening tool 100 can be inserted may be formed on the upper side wall 82a.

The side wall 82a of the heat transfer base 8 is provided with a screw hole 86a corresponding to the screw 85a, and the side wall 82b is provided with a screw hole 86b corresponding to the screw 85b.

As described above, the regeneration resistor unit 4 according to the embodiment can easily release the heat of the regeneration resistor 9 to the casing 41 by forming the heat transfer base 8 into the gutter shape.
The casing 41 functions as a wind tunnel, which significantly improves the cooling capacity of the regeneration resistor unit 4.

Typically, the capacity and the number of the cooling fans 6 are accordingly selected so that the ventilation capacity (cooling capacity) appropriate for the number of the regeneration resistor 9 may be obtained. Because the regeneration resistor unit 4 according to the embodiment significantly enhances the cooling capacity of the regeneration resistor 9, the cooling fan 6 with a smaller size than conventionally employed may be employed. Herein, with the width of the casing 41 and the number of the regeneration resistors 9 and heat transfer bases 8 considered, two cooling fans 6 are arranged in parallel in the width direction of the casing 41 to obtain a sufficient wind tunnel effect.

As illustrated in FIG. 2, the regeneration resistor unit 4 according to the embodiment of which cooling capacity is enhanced may be arranged along with, for example, the other control device 5 in the housing 20 of the control panel 2. Thus, it is not required to separately install a housing for accommodating the regeneration resistor 9 in addition to the control panel 2, which is advantageous in terms of an installation space and improves the appearance thereof.

The example described above illustrates the heat transfer base 8 having a substantially U-shape in cross-sectional view, but the shape is not specifically limited thereto. It is sufficient that the heat transfer base 8 is provided with the resistor mounting wall 81 to which the regeneration resistor 9 serving as a heating element is mounted in a close contact state and with the side walls 82 and 82, respectively, extending from the both ends of the resistor mounting wall 81 and being mounted to the inner surface of the casing 41 in a contacting state. The heat transfer base 8 may have, for example, an I-shape in cross-sectional view, a substantially C-shape in cross-sectional view, or a substantially Z-shape in cross-sectional view.

A structure for accommodating the regeneration resistor unit 4 in the control panel 2 will be described with mainly reference to FIG. 2, FIG. 3A, and FIG. 3B.

As illustrated in FIG. 2, FIG. 3A, and FIG. 3B, the regeneration resistor unit 4 is accommodated in the lower part of the housing 20 of the control panel 2. The regeneration resistor unit 4 is slidably arranged via supporting members 7. That is, the casing 41 of the regeneration resistor unit 4 is slidably arranged on the supporting members 7 arranged in the housing 20 of the control panel 2. Accordingly, even the regeneration resistor unit 4 that is a relatively heavy object can be easily taken in and out of the housing 20 of the control panel 2.

This configuration allows even one person to easily take the regeneration resistor unit 4 into and out of a predetermined position in the housing 20.

Two supporting members 7 that slidably support the casing 41 of the regeneration resistor unit 4 are arranged in parallel with each other at predetermined intervals on the bottom surface of the housing 20. Each of the supporting members 7 has a metal support body 70 formed in a rail shape and a slide plate 71 provided on a surface of the support body 70.

That is, the slide plate 71 formed of, for example, heat-resistant resin and having a small frictional resistance is slidably and directly contacted with the casing 41 in the supporting member 7.

The rail-shaped support body 70 is formed to be an inverted U-shape to achieve sufficient strength and weight reduction and so that the casing 41 is placed with a predetermined gap between itself and the bottom surface of the housing 20 of the control panel 2.

In such a manner, the regeneration resistor unit 4 that is a heavy object and reaches high-temperature is arranged in the housing 20 of the control panel 2 via the supporting member 7. Because the supporting member 7 is formed to be an inverted U-shape, a certain gap is formed between the casing 41 of the high-temperature regeneration resistor unit 4 and the bottom surface of the housing 20 of the control panel 2. The heat of the regeneration resistor unit 4 is therefore hardly transferred to the housing 20 immediately.

The supporting member 7 is arranged so that one end thereof faces the unit port 24 (refer to FIG. 2) formed on the side surface 201 of the housing 20 of the control panel 2. That is, as illustrated in FIG. 3A and FIG. 3B, the supporting member 7 extends across the longitudinal direction of the regeneration resistor unit 4.

The regeneration resistor unit 4 accommodated in the housing 20 is thus positioned so that the upper side thereof on which the cooling fan 6 is provided is positioned at one edge surface side of the housing 20 of the control panel 2 and the lower side thereof is positioned at the other edge surface 202 side. Although not illustrated in FIG. 2, a plurality of slits for suctioning outside air are formed on one edge surface of the housing 20 of the control panel 2, and a plurality of slits for exhausting air are formed on the other edge surface.

As illustrated in FIG. 3B, a supporting piece 25 having a cantilever supporting structure is provided inside the housing 20 of the control panel 2. The supporting piece 25 includes a base end part 25a fixed by a machine screw 26 and a leading end part 25b extending diagonally upward. The supporting piece 25 has a predetermined elastic force and cooperates with the supporting member 7 to simply and securely hold the regeneration resistor unit 4.

The regeneration resistor unit 4 is accommodated inside the housing 20 by being slid in the direction indicated by an arrow 400 in FIG. 3B through the unit port 24 (refer to FIG. 2). That is, the regeneration resistor unit 4 is smoothly pushed to slide in the direction along the arrow 400 through the unit port 24 on the slide plate 71 of the supporting member 7. Then the upper surface of one of the side surfaces of the regeneration resistor unit 4 is caused to be slid against a downward pressing force from the supporting piece 25. As a result, the regeneration resistor unit 4 is easily pressed and supported in the control panel 2.

When it is desired to more firmly fix the regeneration resistor unit 4, the side surface of the casing 41 of the regeneration resistor unit 4 is screwed onto the supporting member 7 via a plate-shaped fixing member 45 (refer to FIG. 3B). In this manner, the supporting member 7 including the slide plate 71 may exert greater effect by being combined with the supporting piece 25.

The embodiment described above has been exemplified with the heating element unit, the control panel, and the robot system. The control panel is described as the control panel 2 included in the robot system.

The control panel is, however, not necessarily limited to the one used in the robot system. Any control panel including the regeneration resistor unit 4 may be adopted. For example, a control panel used in a power converter such as an inverter or a converter may be adopted. In addition, an accommodation structure in the control panel may be the same as described above.

According to the embodiment described above, the heating element unit includes heating means for generating heat, heat radiation means for holding the heating means and radiating heat from the heating means by heat conduction, and accommodating means for accommodating the heat radiation means. The heat radiation means includes heat-absorbing means for directly absorbing the heat from the heating means, and heat-transfer means for transferring the heat from the heat-absorbing means to the accommodating means. The heating element means also includes cooling means for forcibly cooling the heating means.

According to the embodiment described above, a heat radiation method in the heating element unit includes a heating unit, a heat radiation unit that holds the heating unit in a close contact state and radiating the heat from the heating unit by heat conduction, and an accommodating unit that accommodates the heat radiation unit with at least part thereof contacting with the accommodating unit. The heat radiation unit directly absorbs the heat from the heating unit and transfers the absorbed heat to the accommodating unit. The heat radiation method in the heating element unit further includes an air-cooling unit that air-cools the heating unit. The heat radiation unit holds the heating unit in a hanging state in the accommodating unit and forcibly cools the heating unit by cooling air from the air-cooling unit.

## Claims

1. A heating element unit (4) comprising:
a heating element (9);
a heat transfer base (8) in which the heating element (9) is provided; and
a casing (41) in which the heat transfer base (8) is arranged, wherein
the heat transfer base (8) includes a mounting wall (81) on which the heating element (9) is mounted in a close contact state, and side walls (82a, 82b) that perpendicularly extend in a same direction from both ends in a short direction of the mounting wall (81) and are mounted on an inner surface of the casing (41) in a contact state.

2. The heating element unit (4) according to claim 1, wherein the heating element (9) is a regeneration resistor (9) that converts regenerative electric power generated by an electric motor into thermal energy.

3. The heating element unit (4) according to claim 1 or 2, wherein
the casing (41) forms a wind tunnel having openings at both ends thereof, and
the heating element unit (4) further comprises a cooling fan (6) that is disposed at one of the opposed openings.

4. The heating element unit (4) according to claim 3, further comprising one or more heat transfer bases (8) that are arranged in the casing (41) at predetermined intervals in a short direction of the side walls (82a, 82b) so that a longitudinal direction of the heat transfer bases is aligned with a direction along which cooling air from the cooling fan (6) flows.

5. The heating element unit (4) according to any one of claims 1 to 4, wherein the heating element (9) and the heat transfer base (8) are arranged so that the longitudinal directions thereof are identical with each other.

6. A control panel (2) that accommodates the heating element unit (4) according to any one of claims 1 to 5.

7. A robot system comprising:
a control panel (2) that accommodates the heating element unit (4) according to any one of claims 1 to 5 and a control device (5) for an electric motor; and
a robot (1) that is driven by the electric motor.

8. The robot system according to claim 7, wherein the casing (41) of the heating element unit (4) is slidably arranged in a housing (20) of the control panel (2) via a supporting member (7).

9. The robot system according to claim 8, wherein
the supporting member (7) comprises:
a rail-shaped support body (70) that is provided on a bottom surface of the housing (20) and supports the casing (41); and
a slide plate (71) that is provided on a surface of the support body (70) and slidably contacts with the casing (41).
